# FASCICULE DE BREVET EUROPEEN

(11) **EP 2 272 029 B1**
(45) Date de publication et mention de la délivrance du brevet: **08.01.2014**
(21) Numéro de dépôt: 09742218.2
(22) Date de dépôt: 23.04.2009
(51) Int. Cl.: G06K 19/04, G06K 19/077

(54) **RECIPIENT PORTANT UNE ETIQUETTE ELECTRONIQUE AVEC ECRAN**
BEHÄLTER MIT ELEKTRONISCHEM ETIKETT MIT EINEM BILDSCHIRM
CONTAINER BEARING AN ELECTRONIC LABEL WITH A SCREEN

(30) Priorité: 25.04.2008 FR 0802341
(43) Date de publication de la demande: 12.01.2011
(73) Titulaire: Sidel Participations, 76930 Octeville Sur Mer (FR)
(72) Inventeur: FEUILLOLEY, Guy, F- 76930 Octeville Sur Mer (FR)
(74) Mandataire: Demulsant, Xavier
(86) Numéro de dépôt international: PCT/FR2009/000480
(87) Numéro de publication internationale: WO 2009/136020

(56) Documents cités:
- EP-A- 1 437 695
- WO-A-00/36560
- WO-A-2005/064579
- JP-A- 2004 020 771
- US-A1- 2004 124 988

## Description

L'invention a trait à l'étiquetage des récipients tels que les bouteilles en plastique ou en verre, ou les boîtes en métal. Plus précisément, l'invention a trait aux étiquettes affichant, pour un client, de manière lisible, des informations sur le produit.

Les étiquettes que l'on trouve communément sur les étalages des magasins sont constituées d'un support sur lequel sont inscrites de manière permanente diverses informations sur le produit destinées au client, telles que, par exemple, le nom commercial du produit, le nom de l'exploitant, la date de péremption, le prix, etc.

Il n'est pas rare qu'un produit, une fois mis en rayon, voie certaines de ces informations modifiées, notamment son prix, et qu'un nouvel étiquetage soit alors nécessaire. Ces modifications occasionnent des manipulations supplémentaires dues à la production de nouvelles étiquettes et au collage de celles-ci par-dessus les anciennes étiquettes.

Il est donc intéressant de proposer une étiquette vierge pouvant supporter l'inscription d'informations propres au seul produit sur lequel est posée l'étiquette et permettant une mise à jour de ces informations tout en occasionnant le moins de manipulation possible.

De plus, dans le cas des récipients tels que les bouteilles, la surface sur laquelle est fixée l'étiquette - celle visible par le client - est généralement courbe. L'étiquette doit donc présenter une souplesse suffisante pour pouvoir suivre cette courbure.

La présente invention se rapporte à un récipient portant une étiquette électronique possédant un écran d'affichage mince pour le client, cet écran étant suffisamment souple pour que l'étiquette s'adapte à la surface courbe du récipient. L'étiquette comprend de plus un moyen de commander l'affichage des informations, assurant une mise à jour rapide et peu fastidieuse.

On connaît déjà dans l'art antérieur des techniques pour produire des écrans souples et minces comme des feuilles de papier, appelés papiers électroniques.

Le brevet US 4,143,103, de la société XEROX, décrit une méthode de fabrication de panneaux plats aptes à afficher des informations lisibles pour un oeil humain normal grâce à des particules bicolores contenues dans un matériau solide et à un liquide diélectrique absorbé par le matériau solide de sorte que les particules puissent pivoter sous l'action d'une sollicitation externe mais sans translater dans leur milieu.

La demande de brevet FR 2 901 615, de la société PHILIPS, propose un panneau contenant une encre électronique. Cette encre contient des particules de couleurs différentes contenues dans des capsules et répondant à des tensions dans des plages de niveaux différents, de sorte à afficher une information lisible pour un être humain en pilotant des décharges au moyen de deux électrodes.

Le brevet US 6 664 944 de la société E-INK porte sur un moyen similaire à celui exposé ci-dessus. Sur un substrat sont disposées des capsules contenant un fluide et des particules chargées ayant des propriétés optiques. Ces particules sont soit de couleur, soit noires, soit blanches. Deux électrodes sont placées sur chaque face du substrat. Lorsqu'une différence de potentiel est instaurée entre les deux électrodes, les particules migrent chacune vers une des électrodes en fonction de leurs propriétés électriques, créant ainsi un effet visuel.

Il existe déjà des étiquettes électroniques permettant d'afficher et d'assurer une mise à jour des informations sur un produit.

La demande de brevet US 2007 0152045 décrit une étiquette pour des composants électroniques permettant de changer l'information affichée à chaque fois que l'état du composant change. A cet effet, le composant en question comporte une mémoire dédiée au stockage des informations sur lui-même. A chaque fois que les informations changent, une interface insérée dans le composant lit les informations et commande le changement de l'affichage des informations sur un écran. L'écran est de type papier électronique et assure l'affichage des informations même lorsque l'alimentation est coupée. La mémoire et l'interface entre cette mémoire et l'écran sont portées par le composant.

Le brevet EP 1 240 619 propose une étiquette électronique comprenant un support souple sur lequel sont disposés les éléments constituant l'étiquette, une antenne, afin de communiquer avec un lecteur distant et de servir de source d'énergie, et une puce électronique stockant les informations ainsi qu'une protection rigide pour la puce.

La demande de brevet EP 1 645 997 présente un système permettant d'étiqueter des produits de manière unique et comprenant un moyen d'affichage de type papier électronique et une mémoire. Il comprend en outre un moyen pour intégrer les données spécifiques au produit dans la mémoire. De cette façon, l'étiquette assure le suivi et la gestion des produits dans leur différentes étapes de passage, de l'usine où ils sont produits, en passant par les entrepôts où ils sont stockés, jusqu'au client qui doit être livré, en changeant son affichage à chaque changement dans l'état des produits.

La demande de brevet WO 2005/064579 décrit une étiquette électronique sans contact fixée à un récipient.

La demande de brevet JP 2004020771 propose une étiquette équipée d'un tag sans contact. L'étiquette est formée par jonction des deux extrémités d'un matériau de base formé d'un film, l'une sur l'autre, l'étiquette étant appliquée sur la surface externe circonférentielle d'une bouteille. Le motif d'une antenne est imprimée en encre conductrice sur une partie du matériau de base et le tag sans contact est fixé sur l'antenne.

De l'avis des inventeurs toutefois, ces étiquettes ne permettent pas de réaliser un étiquetage électronique efficace dans les rayons des magasins, de manière à la fois attractive et suffisamment économe en énergie.

En effet, compte tenu de la concurrence dans le domaine des produits de grande consommation, dont doivent tenir compte actuellement les fabricants, l'important n'est plus simplement d'informer sur un produit mais aussi d'attirer l'attention du client sur le produit. C'est pourquoi de nombreuses étiquettes produisent des effets d'optiques donnant par exemple l'illusion d'un relief ou d'un mouvement.

Cependant, ces étiquettes sont limitées quant à leur capacité d'affichage, du fait de leur surface qui ne peut excéder celle du produit sur lequel elles sont apposées, et quant à leur attraction et distinction du fait du statisme de l'affichage.

L'invention vise notamment à pallier à ces inconvénients.

A cet effet, l'invention se rapporte à un récipient selon la revendication 1.

L'écran électronique est par exemple de type papier électronique comprenant un substrat sur lequel est déposée une substance de type encre électronique. L'encre comprend par exemple une substance organique, comme des diodes électroluminescentes, ou des cristaux liquides.

Selon un mode de réalisation préféré, le récipient comprend une interface de communication reliée au microcontrôleur.

L'interface émet et reçoit par exemple des ondes radio ou des ondes infrarouges.

La source d'énergie est avantageusement de type photovoltaïque ou de type pile électrique.

Le récipient peut comprendre en outre un composant de stockage de l'énergie, par exemple de type accumulateur ou de type supercapacité.

De préférence, le microcontrôleur gère l'énergie fournie à l'écran.

Selon le mode de réalisation préféré, l'affichage sur l'écran électronique est rémanent.

Avantageusement, le film est de type thermorétractable.

L'étiquette peut être fixée par-dessus ou par-dessous tout ou partie du film thermorétractable.

Avantageusement, l'étiquette est séparable du film thermorétractable pour en faciliter le recyclage.

D'autres objets et avantages de l'invention apparaîtront à la lumière de la description faite ci-après en référence aux dessins annexés dans lesquels :
- la figure 1 est une vue en perspective d'un récipient comprenant une étiquette recouverte d'un film de protection ;
- la figure 2 est une vue en perspective du récipient de la figure 1 dans lequel le film de protection de l'étiquette a été retiré ;
- la figure 3 est une vue en perspective de l'étiquette fixée selon deux extrémités sur un film thermorétractable ;
- la figure 4 est une vue de dessus de la figure 3 ;
- la figure 5 est une vue de détail de la figure 4 montrant l'extrémité de l'étiquette fixée au film ;
- la figure 6 est une vue en perspective de l'étiquette montée sous un fourreau réalisé dans un film thermorétractable ;
- la figure 7 est une vue de dessus de l'étiquette de la figure 6 ;
- la figure 8 est une vue en perspective de l'étiquette montée sous une section d'un fourreau de film thermorétractable ;
- la figure 9 est une vue de dessus de l'étiquette de la figure 8.

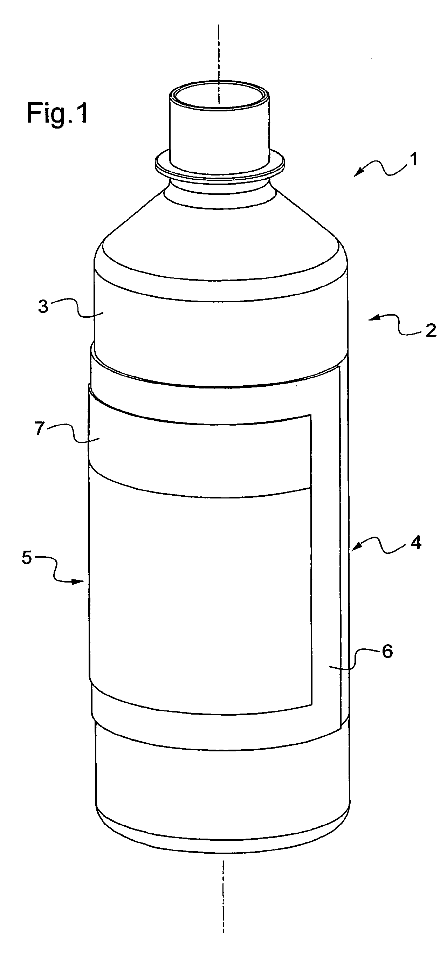

En se référant à la figure 1, il est représenté un récipient **1** destiné à la vente et donc à être exposé par exemple sur des rayons de magasins. Il comprend un corps **2** de forme globale cylindrique. Cependant, la forme du corps **2** n'est pas limitative et peut prendre n'importe quelle conformation géométrique. Le récipient 1 peut être réalisé dans tous types de matériaux, dont les plus courants seront le plastique (par exemple le PET), le carton, le verre ou encore le métal. Le corps **2** est délimité par une surface interne (non visible sur les figures), définissant l'espace où sera stocké un produit dans le récipient, et une face **3** externe. Dans l'exemple illustré, la face **3** externe du corps **2** comporte une région **4** centrale sensiblement régulière, c'est-à-dire sans aspérités à l'échelle d'un utilisateur.

Sur la région **4** centrale, le récipient porte une étiquette **5.** L'étiquette **5** comporte un support **6,** constitué d'un matériau souple et isolant.

« Souple » désigne ici la propriété d'un élément à se courber, pour s'adapter à la forme de la surface sur laquelle il est posé, sans avoir à le déformer au moyen d'un outil et sans provoquer de dommages sur cet élément.

L'étiquette **5** est, au moins partiellement, recouverte d'un film **7** de protection, qui sera détaillé plus loin.

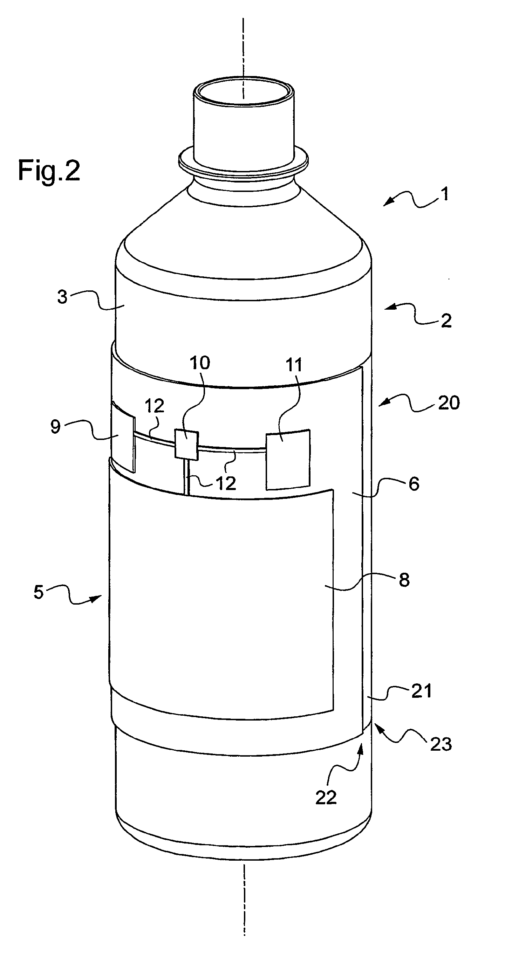

Sur la figure 2, le film **7** de protection a été ôté, dévoilant des composants de l'étiquette **5.** Ainsi, l'étiquette **5** comprend un écran **8,** une source **9** d'énergie, un microcontrôleur **10** et une interface **11** de communication, le tout fixé sur le support **6.**

Selon le mode de réalisation présenté sur les figures 1 à 8, le microcontrôleur **10** est relié à la source **9** d'énergie, à l'interface **11** de communication et à l'écran **8** par l'intermédiaire d'une connectique **12.**

L'écran **8** est par exemple de type papier électronique ce qui permet d'obtenir un écran électronique d'aspect similaire à celui d'une feuille de papier classique, en utilisant l'éclairage issu de l'environnement pour rendre des images, au lieu d'un rétro éclairage comme dans la plupart des écrans.

Des exemples des compagnies XEROX, PHILIPS ou E-INK ont été décrits dans l'introduction. Le papier électronique comprend généralement un substrat, par exemple un film de plastique. De l'encre électronique est déposée sur le substrat. Cette encre est constituée de particules polarisées, réagissant à des courants, formant une substance semi-conductrice. On pourra citer comme exemples de particules les molécules organiques, tels que des polymères, des cristaux liquides ou toute autre particule polarisable aux propriétés optiques. L'encre peut également comprendre des molécules émettant un rayonnement dont la longueur d'onde varie selon l'excitation, telles que pour les diodes électroluminescentes organiques (OLED). Le substrat comporte des moyens pour commander la position des particules ou l'excitation des molécules. Par exemple, le substrat est solidaire d'un circuit imprimé définissant les pixels de l'écran ; dès lors, en commandant le courant dans le circuit, il est possible d'organiser les particules et de définir ainsi une image.

Selon la technologie employée, l'image créée peut être polychrome ou monochrome. La résolution des images obtenue sur ce type d'écran est similaire à celle des écrans classiques. De ce fait, les images affichées peuvent être complexes tout en conservant un rendu agréable pour un client.

De plus, certaines encres affichent des images rémanentes, c'est-à-dire qu'elles n'ont pas besoin d'être alimentées en continu pour afficher une image et ne requièrent un apport d'énergie que pour changer d'état (c'est-à-dire pour changer l'image). En effet, lorsqu'un courant est envoyé dans le circuit, les particules contenues dans ces encres s'organisent dans le but d'afficher l'image commandée. Une fois que le courant est interrompu, les particules conservent leur organisation, conservant ainsi l'image affichée. Les particules changeront d'organisation lorsqu'un courant, commandant une autre image, sera de nouveau envoyé.

Dès lors, les informations relatives au produit contenu dans le récipient 1 peuvent être partagées sur plusieurs images, qui peuvent être programmées pour défiler à un rythme prédéterminé ; la quantité d'informations affichées n'est dès lors plus limitée par la surface de l'étiquette **5.**

La vitesse avec laquelle les particules sont susceptibles de se réorganiser, et donc de modifier l'image, peut être suffisante pour faire défiler des images à une cadence de type vidéo (24 images par seconde). Dès lors, il est possible d'afficher sur l'écran **8** de véritables vidéos, par exemple de promotion.

L'écran **8** formé par le substrat, les moyens de commander aux particules de l'encre et l'encre a une épaisseur globale inférieure au millimètre et conserve une souplesse suffisante pour se conformer au support **6.**

La source **9** d'énergie permet d'alimenter l'ensemble des composants de l'étiquette **5,** par exemple sous forme de courant électrique. En particulier, elle gère l'alimentation de l'écran **8** via le microcontrôleur **10.** La source **9** est de préférence de petite taille afin de pouvoir être maintenue discrètement sur le support **6.** Par exemple, elle pourra être réalisée à partir de cellules photovoltaïques, ne fonctionnant qu'en présence de lumière, ou à partir de piles électriques. La source **9** d'énergie peut être associée à un composant de stockage de l'énergie. Ainsi, la source **9** d'énergie, en fonctionnement, peut recharger, sur commande du microcontrôleur **10,** le composant, pour lui permettre de restituer de l'énergie à tout moment. Cette association peut s'avérer utile dans le cas des cellules photovoltaïques.

Le composant de stockage peut se présenter sous la forme d'un accumulateur, et en particulier sous la forme d'un accumulateur électrochimique, par exemple de type supercapacité, comme les condensateurs à double couche électrochimique développés par la société EPCOS (*Electronique International,* Les condensateurs à double couche électrochimique, Jean-Florent Helie, novembre 2004), ou encore les supercondensateurs à base de nanotubes de carbone.

Le microcontrôleur **10** comprend une mémoire intégrée et détermine l'image à afficher sur l'écran **8.** Selon le mode de réalisation des figures, le microcontrôleur **10** réalise la liaison entre l'écran **8** et la source **9** d'énergie, gérant ainsi la distribution de l'énergie dans l'écran **8** pour commander l'affichage. Le microcontrôleur **10** intègre des données permettant de commander l'image à afficher ainsi que le rythme de défilement des images. Ces données peuvent concerner spécifiquement le produit contenu dans le récipient, comme par exemple son nom, la marque, le prix, la date de péremption ou des contrindications d'utilisation, mais elles peuvent aussi concerner le produit plus largement, comme d'éventuels produits dérivés, des suggestions d'utilisation en combinaison avec d'autres produits, ou encore se présenter sous la forme de véritables spots publicitaires.

Les données peuvent être implémentées de manière définitive avant que le récipient **1** ne soit exposé à la vente. En variante, les données peuvent aussi être mises à jour une fois le récipient **1** en rayon.

Afin de réaliser une telle mise à jour, l'interface **11** de communication, reliée au microcontrôleur **10,** permet de recevoir des données, à distance ou par l'intermédiaire d'un câble, afin de les transmettre au microcontrôleur **10** qui met alors à jour celles déjà contenues, via la connectique **12.** L'interface **11** permet également d'émettre des données extraites du microcontrôleur **10** (par exemple concernant la durée d'exposition en rayon du récipient **1)** à destination d'un récepteur distant. Le système d'émission et de réception de l'étiquette 5 peut être par exemple de type radio ou infrarouge. Dans ce cas, les ondes, radio ou infrarouges, peuvent être utilisées en tant que signature et identifier un récipient de manière unique.

Ainsi, il est possible de mettre à jour à distance les données affichées sur l'étiquette **5,** par l'envoi de nouvelles données. Lorsque, par exemple, le prix de récipients **1** en rayon dans un magasin doit être modifié pour prendre en compte l'approche de la date limite de consommation, la manipulation peut être réalisée à distance. Un opérateur reçoit par exemple les informations sur les récipients **1** et détermine quels sont ceux dont le temps d'exposition est supérieur à un seuil prédéterminé. Puis, il configure un émetteur à distance afin d'envoyer les nouvelles données sur le prix des récipients **1** ainsi déterminés, et l'affichage du prix sur les écrans **8** est alors mis à jour. Il n'est donc plus nécessaire de produire de nouvelles étiquettes portant le nouveau prix et de remplacer les étiquettes obsolètes une par une d'où l'abolition d'une démarche longue, fastidieuse et coûteuse.

On décrit à présent la manière dont l'étiquette **8** peut être fixée au récipient **1.**

Selon un mode de réalisation préféré, l'étiquette **5** est fixée au moyen d'un film **20,** par exemple thermorétractable, rapporté sur la face **3** externe du corps **2** du récipient **1.** Plusieurs configurations sont envisageables. En effet, le film **20** thermorétractable peut être constitué d'une unique pièce ou de deux pièces et enserrer complètement la face **3** externe sur son périmètre ou être en contact avec une partie seulement de ce périmètre. Parallèlement, l'étiquette **5** peut être montée sous ou sur le film **20.**

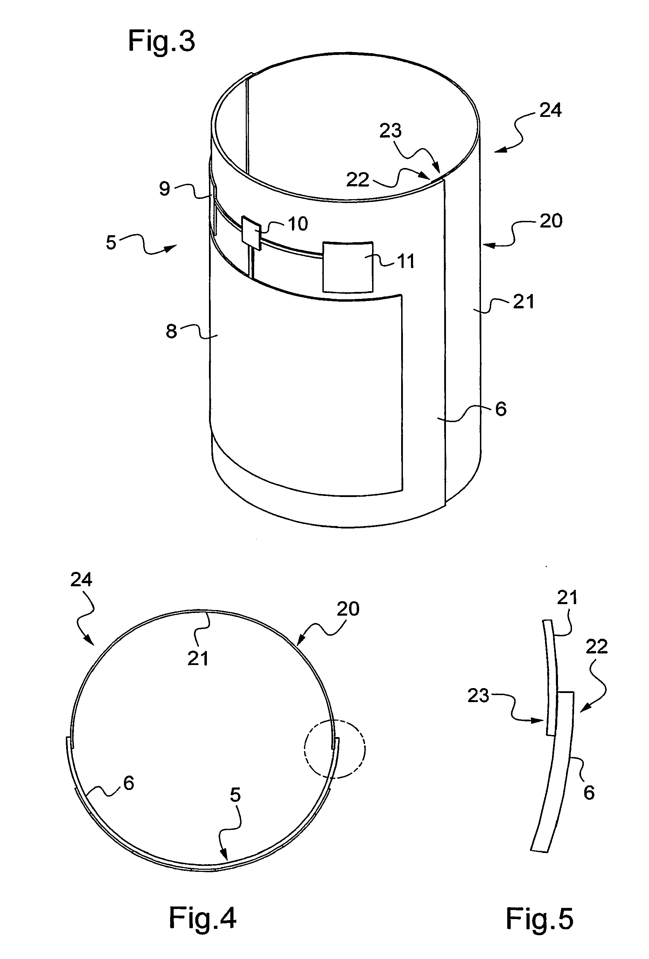

Dans un premier mode de réalisation (figures 3 à 5), le film **20** thermorétractable se présente sous la forme d'une bande **21** dont la longueur est inférieure au périmètre du corps **2** du récipient **1.** Dans ce cas, deux parties **22** extrêmes latérales du support **6** de l'étiquette **5** sont fixés sous ou sur des parties **23** extrêmes de la bande **21,** de sorte que l'ensemble **24** composé de l'étiquette **5** et du film **20** se présente sous la forme d'un fourreau, de diamètre supérieur à celui du récipient. Sur les figures 3 à 5, seule est représentée la configuration dans laquelle le support **6** est fixé sous le film **20.** L'étiquette **5** est fixée sous ou sur le film **20** thermorétractable par collage, soudure ou thermocollage. L'ensemble **24** est ensuite enfilé sur le corps **2** du récipient **1.** On expose alors le récipient à une source chaleur, sous l'effet de laquelle le film **20** se rétracte contre le récipient **1,** plaquant l'étiquette **5** contre le corps **2.** Afin de protéger l'étiquette **5** des altérations dues aux chocs ou aux salissures, il peut être envisagé (de manière non représentée) de fixer le film **7** de protection par dessus les composants de l'étiquette **5 -** l'écran **8,** la source **9** d'énergie, le microcontrôleur **10** et l'interface **11** de communication - tout en laissant l'écran **8** visible.

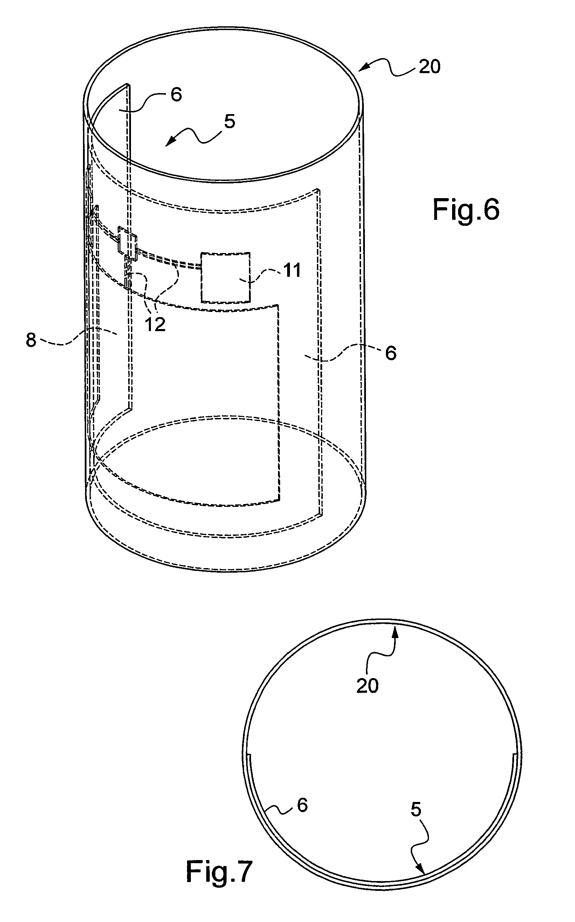

Dans un deuxième mode de réalisation (figures 6 et 7), le film **20** thermorétractable se présente sous la forme d'un fourreau complet, de diamètre supérieur à celui du récipient **1** et de l'étiquette **5.** Le support **6** de l'étiquette **5** est posé contre la région **4** centrale du récipient. Puis le film **20** est enfilé conjointement sur le récipient **1** et l'étiquette **5.** Par passage du récipient **1** dans un four, le film **20** se rétracte contre le récipient **1,** épousant l'étiquette **5** et la maintenant solidaire du récipient **1,** sous le film **20** thermorétractable. Le film **20** thermorétractable enserre la face **3** externe sur l'ensemble de son périmètre et est transparent au moins au niveau de l'écran **8** de l'étiquette **5** afin de laisser l'écran **8** visible.

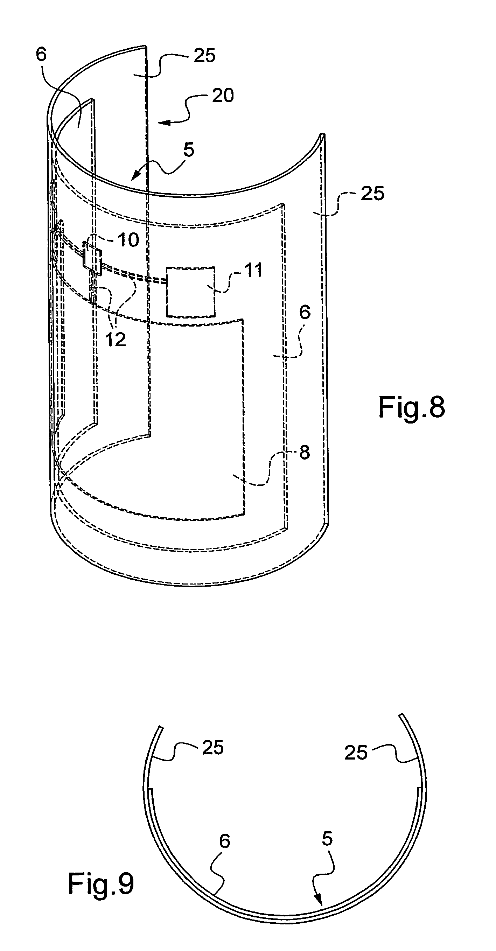

Selon un autre mode de réalisation, qui ne fait pas partie de l'invention, illustré sur les figures 8 et 9, le film **20** se présente sous la forme d'une bande ouverte recouvrant l'étiquette **5,** de sorte que, lorsqu'il est apposé contre le récipient **1,** il est en contact avec la face **3** externe dans deux zones **25** d'extrémité, de part et d'autre de l'étiquette **5,** qui peuvent être collées sur le récipient **1** pour assurer la fixation de l'étiquette **5.**

Le récipient **1** et l'étiquette **5** ainsi formée permettent à la fois de créer un emballage attractif pour l'oeil d'un client en offrant la possibilité d'afficher des informations en plusieurs images, de créer des images mouvantes comme dans une vidéo et de mettre à jour les informations affichées de manière simple et économe en matière d'énergie et de coût. L'emballage devient un nouvel atout pour l'esthétique du produit, tout en procurant une plus grande capacité d'affichage d'informations.

Le support **6** et l'écran **8** souples rendent l'étiquette **5** adaptable à toute forme de récipient.

La technique de fixation de l'étiquette **5** au moyen d'un film **20** thermorétractable est par ailleurs simple à mettre en oeuvre et peu coûteuse, la rendant adaptée à des cadences de production industrielle.

## Revendications

1. Récipient **(1),** muni d'un corps **(2),** contenant un produit, sur lequel est fixée une étiquette **(5)** électronique souple s'adaptant à la conformation du récipient **(1),** l'étiquette **(5)** comprenant un support **(6)** et, fixés sur le support **(6),** les composants suivants :
- un écran **(8)** électronique permettant l'affichage d'informations relatives au produit et lisibles pour un utilisateur ;
- un microcontrôleur **(10)** relié à l'écran **(8)** pour commander l'affichage des informations sur celui-ci et sa mise à jour ;
- une source **(9)** d'énergie reliée au microcontrôleur ;
**caractérisé en ce que** l'étiquette **(5)** est fixée sur le récipient **(1)** au moyen d'un fourreau comprenant un film **(20)** de type thermorétractable séparable de l'étiquette et rapporté sur une face externe **(3)** du récipient (1), le fourreau étant enfilé sur le corps **(2)** du récipient.

2. Récipient **(1)** selon la revendication 1, dans lequel le film **(20)** forme le fourreau.

3. Récipient **(1)** selon la revendication 2, dans lequel l'étiquette **(5)** est fixée par-dessous tout ou partie du film **(20)** thermorétractable, laissant l'écran **(8)** visible.

4. Récipient **(1)** selon la revendication 1, dans lequel le fourreau est composé du film **(20)** et de l'étiquette **(5)** fixée sur le film **(20).**

5. Récipient **(1)** selon la revendication 4, dans lequel l'étiquette **(5)** est fixée par-dessus tout ou partie du film **(20)** thermorétractable.

6. Récipient **(1)** selon l'une des revendications 1 à 5, dans lequel l'écran **(8)** électronique est de type papier électronique.

7. Récipient **(1)** selon la revendication 6, dans lequel l'écran **(8)** électronique comprend un substrat sur lequel est déposée une substance de type encre électronique.

8. Récipient **(1)** selon la revendication 7, dans lequel l'encre électronique comprend une substance organique.

9. Récipient (1) selon la revendication 7 ou la revendication 8, dans lequel l'encre électronique comprend des cristaux liquides.

10. Récipient (1) selon la revendication 8, dans lequel l'encre électronique comprend des diodes électroluminescentes organiques.

11. Récipient **(1)** selon l'une des revendications 1 à 10, qui comprend en outre une interface (11) de communication reliée au microcontrôleur **(10).**

12. Récipient **(1)** selon la revendication 11, dans lequel l'interface **(11)** émet et reçoit des ondes radio.

13. Récipient **(1)** selon la revendication 11, dans lequel l'interface **(11)** émet et reçoit des ondes infrarouges.

14. Récipient **(1)** selon l'une des revendications 1 à 13, dans lequel la source **(9)** d'énergie est de type photovoltaïque.

15. Récipient **(1)** selon l'une des revendications 1 à 13, dans lequel la source **(9)** d'énergie est de type pile électrique.

16. Récipient **(1)** selon l'une des revendications 1 à 5, comprenant un composant de stockage de l'énergie.

17. Récipient **(1)** selon la revendication 16, dans lequel le composant de stockage de l'énergie est de type accumulateur.

18. Récipient **(1)** selon la revendication 16, dans lequel le composant de stockage de l'énergie est de type supercapacité.

19. Récipient **(1)** selon l'une des revendications 1 à 18, dans le quel le microcontrôleur **(10)** gère l'énergie fournie à l'écran.

20. Récipient selon l'une des revendications 1 à 19, dans lequel l'affichage sur l'écran électronique **(8)** est rémanent.

## Patentansprüche

1. Behälter (1), der mit einem ein Produkt enthaltenden Körper (2) versehen ist, auf dem ein elastisches elektronisches Etikett (5) befestigt ist, das sich an die Gestaltung des Behälters (1) anpasst, wobei das Etikett (5) einen Träger (6) und auf dem Träger (6) befestigt die folgenden Bestandteile enthält:
- einen elektronischen Bildschirm (8), der die Anzeige von Informationen bezüglich des Produkts und für einen Benutzer lesbar ermöglicht;
- einen Mikrocontroller (10), der mit dem Bildschirm (8) verbunden ist, um die Anzeige der Informationen auf diesem und ihre Aktualisierung zu steuern;
- eine mit dem Mikrocontroller verbundene Energiequelle (9);
**dadurch gekennzeichnet, dass** das Etikett (5) am Behälter (1) mittels einer Hülle befestigt wird, die eine Folie (20) vom wärmeschrumpfbaren Typ enthält, die vom Etikett trennbar ist und auf eine Außenseite (3) des Behälters (1) aufgebracht werden kann, wobei die Hülle auf den Körper (2) des Behälters aufgeschoben wird.

2. Behälter (1) nach Anspruch 1, wobei die Folie (20) die Hülle formt.

3. Behälter (1) nach Anspruch 2, wobei das Etikett (5) unter der ganzen oder einem Teil der wärmeschrumpfbaren Folie (20) befestigt wird, indem der Bildschirm (8) sichtbar gelassen wird.

4. Behälter (1) nach Anspruch 1, wobei die Hülle aus der Folie (20) und dem an der Folie (20) befestigten Etikett (5) besteht.

5. Behälter (1) nach Anspruch 4, wobei das Etikett (5) über der ganzen oder einem Teil der wärmeschrumpfbaren Folie (20) befestigt ist.

6. Behälter (1) nach einem der Ansprüche 1 bis 5, wobei der elektronische Bildschirm (8) von der Art elektronisches Papier ist.

7. Behälter (1) nach Anspruch 6, wobei der elektronische Bildschirm (8) ein Substrat enthält, auf das eine Substanz von der Art elektronische Tinte aufgebracht wird.

8. Behälter (1) nach Anspruch 7, wobei die elektronische Tinte eine organische Substanz enthält.

9. Behälter (1) nach Anspruch 7 oder Anspruch 8, wobei die elektronische Tinte Flüssigkristalle enthält.

10. Behälter (1) nach Anspruch 8, wobei die elektronische Tinte organische Elektrolumineszenzdioden enthält.

11. Behälter (1) nach einem der Ansprüche 1 bis 10, der außerdem eine Kommunikationsschnittstelle (11) enthält, die mit dem Mikrocontroller (10) verbunden ist.

12. Behälter (1) nach Anspruch 11, wobei die Schnittstelle (11) Funkwellen sendet und empfängt.

13. Behälter (1) nach Anspruch 11, wobei die Schnittstelle (11) Infrarotwellen sendet und empfängt.

14. Behälter (1) nach einem der Ansprüche 1 bis 13, wobei die Energiequelle (9) vom Photovoltaiktyp ist.

15. Behälter (1) nach einem der Ansprüche 1 bis 13, wobei die Energiequelle (9) von der Art elektrische Batterie ist.

16. Behälter (1) nach einem der Ansprüche 1 bis 5, der ein Energiespeicherbauteil enthält.

17. Behälter (1) nach Anspruch 16, wobei das Energiespeicherbauteil von der Art Akkumulator ist.

18. Behälter (1) nach Anspruch 16, wobei das Energiespeicherbauteil von der Art Superkondensator ist.

19. Behälter (1) nach einem der Ansprüche 1 bis 18, wobei der Mikrocontroller (10) die an den Bildschirm gelieferte Energie verwaltet.

20. Behälter nach einem der Ansprüche 1 bis 19, wobei die Anzeige auf dem elektronischen Bildschirm (8) remanent ist.

## Claims

1. Container (1), provided with a body (2), containing a product, on which is fixed a flexible electronic label (5) that adapts to the shape of the container (1), the label (5) comprising a mount (6) and, fixed to the mount (6), the following components:
- an electronic screen (8) making it possible to display information relating to the product and that is legible to a user;
- a microcontroller (10) linked to the screen (8) to control the display of the information thereon and its updating;
- an energy source (9) linked to the microcontroller;
**characterized in that** the label (5) is fixed to the container (1) by means of a sleeve comprising a film (20) of heat-shrinkable type that can be separated from the label and added onto an outer face (3) of the container (1), the sleeve being threaded onto the body (2) of the container.

2. Container (1) according to Claim 1, in which the film (20) forms the sleeve.

3. Container (1) according to Claim 2, in which the label (5) is fixed under all or part of the heat-shrinkable film (20), leaving the screen (8) visible.

4. Container (1) according to Claim 1, in which the sleeve is made up of the film (20) and of the label (5) fixed to the film (20).

5. Container (1) according to Claim 4, in which the label (5) is fixed on top of all or part of the heat-shrinkable film (20).

6. Container (1) according to one of Claims 1 to 5, in which the electronic screen (8) is of electronic paper type.

7. Container (1) according to Claim 6, in which the electronic screen (8) comprises a substrate on which is deposited a substance of electronic ink type.

8. Container (1) according to Claim 7, in which the electronic ink comprises an organic substance.

9. Container (1) according to Claim 7 or Claim 8, in which the electronic ink comprises liquid crystals.

10. Container (1) according to Claim 8, in which the electronic ink comprises organic light-emitting diodes.

11. Container (1) according to one of Claims 1 to 10, which also comprises a communication interface (11) linked to the microcontroller (10).

12. Container (1) according to Claim 11, in which the interface (11) transmits and receives radio waves.

13. Container (1) according to Claim 11, in which the interface (11) transmits and receives infrared waves.

14. Container (1) according to one of Claims 1 to 13, in which the energy source (9) is of photovoltaic type.

15. Container (1) according to one of Claims 1 to 13, in which the energy source (9) is of electrical cell battery type.

16. Container (1) according to one of Claims 1 to 5, comprising an energy storage component.

17. Container (1) according to Claim 16, in which the energy storage component is of accumulator type.

18. Container (1) according to Claim 16, in which the energy storage component is of super-capacitor type.

19. Container (1) according to one of Claims 1 to 18, in which the microcontroller (10) manages the energy supplied to the screen.

20. Container according to one of Claims 1 to 19, in which the display on the electronic screen (8) is remanent.
